# EUROPÄISCHE PATENTSCHRIFT

(11) **EP 2 747 984 B1**
(45) Veröffentlichungstag und Bekanntmachung des Hinweises auf die Patenterteilung: **15.07.2015**
(21) Anmeldenummer: 12753681.1
(22) Anmeldetag: 20.08.2012
(51) Int. Cl.: B29C 65/16, G02B 26/08

(54) **VERFAHREN UND VORRICHTUNG ZUM LASERSCHWEISSEN VON ZWEI FÜGEPARTNERN AUS KUNSTSTOFF**
METHOD AND DEVICE FOR LASER WELDING OF TWO PLASTIC MEMBERS TO BE JOINED
PROCÉDÉ ET DISPOSITIF POUR LE SOUDAGE AU LASER DE DEUX PARTIES EN MATIÈRE PLASTIQUE À ASSEMBLER

(30) Priorität: 25.08.2011 DE 102011081554
(43) Veröffentlichungstag der Anmeldung: 02.07.2014
(73) Patentinhaber: LPKF Laser & Electronics AG, 30827 Garbsen (DE)
(72) Erfinder: GEIGER, René, 96103 Hallstadt (DE); BRUNNECKER, Frank, 96117 Memmelsdorf (DE)
(74) Vertreter: Rau, Schneck & Hübner Patentanwälte Rechtsanwälte PartGmbB
(86) Internationale Anmeldenummer: PCT/EP2012/066167
(87) Internationale Veröffentlichungsnummer: WO 2013/026816

(56) Entgegenhaltungen:
- WO-A1-2011/074072
- WO-A2-2009/114375
- JP-A- 2005 001 172
- US-A1- 2011 200 802

## Beschreibung

Die Erfindung betrifft ein Verfahren zum Laserschweißen von zwei Fügepartnern aus Kunststoff, bei dem ein fokussierter Laserstrahl in eine Schweißzone im Bereich der einander zugewandten Grenzflächen der Fügepartner zur Bildung einer Schweißnaht mit einer bestimmten Nahttiefe zwischen den Fügepartnern eingestrahlt wird.

Übliche Kunststoff-Laserschweißverfahren beruhen auf einem Eintrag von thermischer Energie mittels des fokussierten Laserstrahls in die Schweißzone, was zu einem Aufschmelzen der Fügepartner und der entsprechenden Bildung einer Schweißnaht dazwischen führt. Gängig ist in diesem Zusammenhang das sog. Durchstrahlschweißen, bei dem ein für die Laserstrahlung transmissiver Fügepartner auf einem dafür absorbierenden Fügepartner aufgelegt und der Laserstrahl durch den transmissiven Fügepartner auf den absorbierenden Fügepartner gestrahlt wird. Letzterer schmilzt auf, thermische Energie wird auf den transmissiven Fügepartner übertragen, der ebenfalls aufschmilzt, sodass insgesamt in dieser Schweißzone wieder eine Schweißnaht im Bereich der einander zugewandten Grenzflächen der Fügepartner gebildet wird.

Die JP 2005 001 172 A offenbart ein Verfahren zum Laserschweißen von zwei Fügepartnern aus Kunststoff, bei dem ein fokussierter Laserstrahl in eine Schweißzone im Bereich der einander zugewandten Grenzflächen der Partner zur Bildung einer Schweißnaht mit einer bestimmten Nahttiefe zwischen den Fügepartnern eingestrahlt wird. Die Laser-Leistungsdichte wird während des Verschweißvorgangs in Richtung der Nahttiefe in der Schweißzone moduliert. Die Modulation erfolgt durch eine Modulation der Fokusposition des Laserstrahls in Richtung der Nahttiefe, wobei der Fokus während des Vorschubs des Laserstrahls in Naht-Erstreckungsrichtung mindestens einmal die Nahttiefe der Schweißnaht überstreicht.

Die WO 2009/114 375 A2 zeigt eine Vorrichtung, die zum Laserschweißen von zwei Fügepartnern aus Kunststoff geeignet ist. Dabei wird ebenfalls ein fokussierter Laserstrahl in eine Schweißzone im Bereich der einander zugewandten Grenzflächen der Fügepartner zur Bildung einer Schweißnaht mit einer bestimmten Nahttiefe zwischen den Fügepartnern eingestrahlt. Diese Vorrichtung umfasst eine Laserstrahlquelle und eine Laserstrahl-Führungs- und Formungseinrichtung für den Laserstrahl, wobei eine Auslegung der Laserstrahlquelle und/oder der Laserstrahl-Führungs- und Formungseinrichtung derart gewählt ist, dass die Laser-Leistungsdichte während des Verschweiß-Vorganges in Richtung der Nahttiefe modulierbar ist.

Ähnliche Laserschweiß-Vorrichtungen zeigen die Druckschriften US 2011/200802 A1 und WO 2011/074 072 A1.

Aus der US 2003/0090562 A1 ist ein Verfahren und eine Vorrichtung für das Laser-Durchstrahlschweißen bekannt, bei dem der Fokus des Laser-Bearbeitungsstrahls zum Ausgleich von Verwerfungen und ähnlichen Störstellen in der Schweißebene zwischen den beiden Fügepartnern senkrecht zur Schweißebene (z-Richtung) verschiebbar ist. Diese Verschiebung des Bauteils stellt eine träge Bewegung dar. Eine gezielte Einstellung der Wärmeeinflusszone durch hochfrequente Modulation der Z-Lage ist mit diesem System nicht möglich.

Die DE 10 2007 036 838 A1 offenbart ein Verfahren zum Verbinden von Dokumentmaterialien unterschiedlichen Typs in einem Mehrschicht-Sicherheitsdokument-Körper, also beispielsweise einer Scheckkarte, wobei eine in einen Schichtaufbau eingebrachte elektromagnetischen Strahlung moduliert wird. Es handelt sich dabei um eine Amplituden- oder Frequenz-Modulation, eine Modulation der Fokus-Lage der Strahlung senkrecht zur Grenzfläche zwischen den einzelnen Schichten zeigt diese Druckschrift nicht.

Eine zunehmend an Bedeutung gewinnende Laser-Schweißtechnik für Kunststoffe ist das sog. Stumpfstoßschweißen. Mit Hilfe dieser Technik können beispielsweise zwei auf Stumpfstoß zueinander positionierte, für die Laserstrahlung transparente Fügepartner miteinander verschweißt werden, indem die einander zugewandten Grenzflächen mit Hilfe des Laserstrahls aufgeschmolzen und eine entsprechende Schweißnaht mit einem Vorschub des Laserstrahls entlang der Erstreckungsrichtung (x-Richtung) des Stoßbereichs hergestellt werden kann.

Ein grundsätzliches Problem beim Laserschweißen von Fügepartnern aus Kunststoff ist die Tatsache, dass der Laserstrahl durch die Oberfläche eines oder beider Fügepartner in die Schweißzone eingestrahlt werden muss. Je nach Transmissions- oder Absorptionseigenschaften der verwendeten Kunststoffe kann zum einen die Oberfläche durch thermische Einwirkungen in Mitleidenschaft gezogen werden. Zum anderen kann ein Problem darin bestehen, dass die tatsächliche Schweißzone im Bereich der einander zugewandten Grenzflächen relativ begrenzt bezogen auf die Richtung der Nahttiefe (z-Richtung) ist, sodass die Festigkeit und Qualität der Naht verbesserungsbedürftig sein kann.

Zusammenfassend besteht also ein Bedürfnis, die Schweißnahtausprägung in z-Richtung besser und werkstückorientierter steuern zu können.

Diese Aufgabe der Erfindung wird in verfahrenstechnischer Hinsicht durch die im Patentanspruch 1 angegebenen Merkmale gelöst.

Demnach liegt der Kern der vorliegenden Erfindung darin, die Laser-Leistungsdichte während des Verschweißvorgangs in Richtung der Nahttiefe (z-Richtung) zu modulieren. Dabei ist die Modulationsfrequenz der Laser-Leistungsdichte durch eine Modulationsfrequenz der Laser-Fokusposition in Z-Richtung definiert und mit der Vorschubgeschwindigkeit des Laserstrahls in Naht-Erstreckungsrichtung - also im üblichen Koordinatensystem in X-Richtung - derart korreliert, dass der Fokus während des Vorschubs des Laserstrahls in Naht-Erstreckungsrichtung mindestens einmal die Nahttiefe der Schweißnaht überstreicht.

Die Modulationsfrequenz ist dementsprechend bei einem langsamen Vorschub in X-Richtung entsprechend geringer, wie bei einem schnellen Vorschub. Beim sog. Quasi-Simultanschweißen, bei dem eine geschlossene Kontur mehrfach in kurzen Zeitabständen nachgefahren wird, ist die Vorschubgeschwindigkeit um ein vielfaches höher, dementsprechend ist auch die Modulationsfrequenz in diesem Falle entsprechend höher zu wählen.

Ergänzend kann neben der eigentlichen variablen Leistungsdichte diese Modulation auch durch einen variablen, entsprechend modulierten Fokusdurchmesser bezogen auf eine bestimmte z-Posititon der Nahttiefe realisiert werden.

Aufgrund der modulationsbedingten Variabilität des Energieeintrags in z-Richtung kann in vorteilhafter Weise die Nahtgeometrie definiert beeinflusst werden. So kann beispielsweise bei einer Stumpfstoßschweißung zweier gleichermaßen transparenter Fügepartner bei Strahlungsdurchgang eines 2µm-Lasers durch eine Modulation der Z-Lage des Fokus die Energieeinbringung im Bereich der Naht über die Bauteildicke optimiert werden. So wird statt einer zentralen, eng begrenzten Schweißnaht geringer Nahttiefe durch die Modulation in Z-Richtung die Nahttiefe in Z-Richtung erhöht und kann optimal nahe an die oberen und unteren Stoßkanten der Fügepartner herangeführt werden, sodass einerseits eine möglichst große Nahttiefe entsteht, andererseits aber genügend Abstand zu den oberen und unteren Stoßkanten gehalten wird, das eine Oberflächenbeeinträchtigung vermieden wird.

Ein bevorzugter Wellenlängenbereich des Laserstrahls für die Leistungsdichte-modulierte Laserschweißung liegt zwischen 0,7 µm und 2,5 µm, also im Infrarot-Bereich.

Eine typische Auslegung einer entsprechenden Vorrichtung zum Laserschweißen, die eine Modulation der Laser-Leistungsdichte erlaubt, sieht eine entsprechende Auslegung der Laserstrahlquelle und/oder Laserstrahl-führungs- und Formungsreinrichtung vor, sodass die Laser-Leistungsdichte während des Verschweiß-Vorganges in Richtung der Nahttiefe modulierbar ist. Sofern die Laserstrahl-Führungs- und Formungseinrichtung eine Fokussiereinheit mit einer Kollimationslinse und einer Fokussierlinse umfasst, kann die Modulation durch eine Verschiebung der Kollimationslinse und/oder der Fokussierlinse entlang der Durchgangsrichtung des Laserstrahls (optische Achse) realisiert werden. Dazu sind vorzugsweise eine oder beide Linsen motorisch verstellbar. Eine Variante zu dieser Modulationstechnik ist die Modulation der Fokuslage des Laserstrahls durch eine Fokussiereinheit mit einer 3D-Scanner-Einheit.

Weitere Merkmale, Einzelheiten und Vorteile der Erfindung ergeben sich aus der nachfolgenden Beschreibung anhand der beigefügten Zeichnungen. Es zeigen:
- Fig. 1: eine perspektivische, in der Schweißzone weggeschnittene Schemadarstellung zweier Fügepartner bei einer Stumpfstoßschweißung,
- Fig. 2a bis c: eine schematische Schnittdarstellung einer Laserstrahl-Führungs- und Formungseinrichtung mit verschiebbarer Fokussierlinse zur Fokuslagenmodulation, und
- Fig. 3a bis c: eine schematische Schnittdarstellung einer Laserstrahl-Führungs- und Formungseinrichtung mit einer verschiebbaren Kollimationslinse zur Fokuslagenmodulierung.

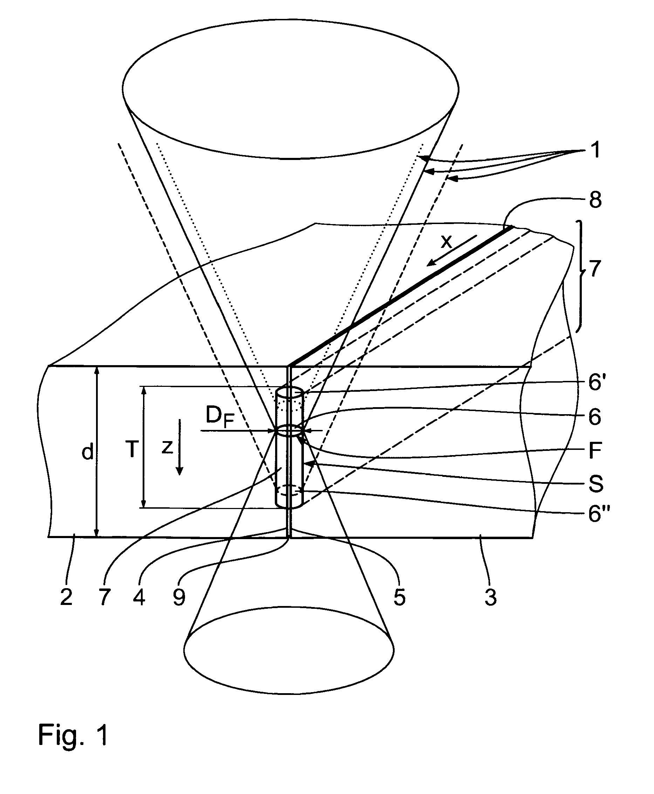

Anhand von Fig. 1 ist das in Nahttiefenrichtung z Leistungsdichtemodulierte Laserschweißverfahren zu erläutern. So wird grundsätzlich ein fokussierter Laserstrahl 1 verwendet, für den die beiden Fügepartner 2, 3 aus einem geeigneten Kunststoff ausreichend transmissiv sind, sodass der Laserstrahl 1 deren Material einerseits durchdringen kann. Andererseits ist der Absorptionsgrad des Materials so hoch, dass ein Teil der Laserenergie im Volumen der Fügepartner 2 absorbiert und in thermische Energie zur Verschweißung umgewandelt werden kann. Geeignet ist beispielsweise ein Infrarot-Laser aus dem Wellenlängenbereich von 0,7 bis 2,5 µm und insbesondere einer Wellenlänge von 2 µm. Die beiden Fügepartner 2, 3 sind in Fig. 1 in einer Konfiguration gezeigt, in der die als ganzes mit S bezeichnete Schweißzone im Bereich der einander zugewandten Grenzflächen 4, 5 der auf Stumpfstoß gesetzten Fügepartner 2, 3 liegt.

Die in Fig. 1 gezeigte Position des Fokus F des Laserstrahls 1 würde zu einer lokal stark begrenzten Volumenabsorption der Laserleistung nur im Bereich um diese Fokusposition 6 mit einer entsprechend engen Ausbildung der Schweißnaht 7 über eine sehr begrenzte Nahttiefe T führen.

Hier greift nun die Erfindung dahingehend an, dass durch später noch zu erörternde konstruktive Ausgestaltungen in der Laserstrahl-Führung und -Fokussierung die Fokusposition 6 in der parallel zur Richtung der Nahttiefe T verlaufenden z-Richtung moduliert wird, also mit einer bestimmten Frequenz auf- und abgefahren wird. Dies ist in Fig. 1 durch die beispielhaft herausgezeichneten, gestrichelt bzw. punktiert dargestellten Fokuspositionen 6', 6" visualisiert.

Insgesamt kann also durch die Modulationsamplitude in z-Richtung die Nahttiefe T definiert bis kurz an die Ober- bzw. Unterkanten 8, 9 der Grenzflächen 4, 5 der Fügepartner 2, 3 herangeführt werden.

Wie in Fig. 1 ferner angedeutet ist, wird der Laserstrahl 1 entlang der in den Grenzflächen 4, 5 zu erstellenden Schweißnaht 7 in x-Richtung kontinuierlich gerührt, wie dies beim sog. Konturschweißen der Fall ist. Die Vorschubgeschwindigkeit vₓ in x-Richtung ist mit der Modulationsfrequenz bzw. Verschiebegeschwindigkeit v_{z} der Fokusposition 6 korreliert. Je nach dem von den Fügepartnern 2, 3 erreichten Absorptionsgrad für die Laserenergie sollte der Fokus F die gesamte Schweißnahttiefe T zumindest ein- oder auch mehrmals überstreichen, um eine in z-Richtung und x-Richtung über die Nahttiefe T gleichmäßig durchgehende, qualitativ einwandfreie Schweißnaht 7 herzustellen. So ist bei einem Fokus-Durchmesser D_{F} von 0,1 mm, einer Nahttiefe von 1 mm bei einer Dicke d der Fügepartner 2, 3 von 2 mm und einer Vorschubgeschwindigkeit vₓ in x-Richtung von 100 mm/s die Modulationsgeschwindigkeit des Fokus F zu 1000 mm/s zu wählen, damit die gesamte Schweißnaht 7 über ihre Nahttiefe T einmal vom Fokus F überstrichen wird.

Wie aus Fig. 1 ferner deutlich wird, kann über die entsprechende Einstellung der Nahttiefe T und deren Position in z-Richtung für die Schweißzone S ein ausreichender Abstand zu den Ober- und Unterkanten 8, 9 der Fügepartner 2, 3 eingehalten werden, sodass Schädigungen an den Sichtflächen der Fügepartner 2, 3 vermieden werden.

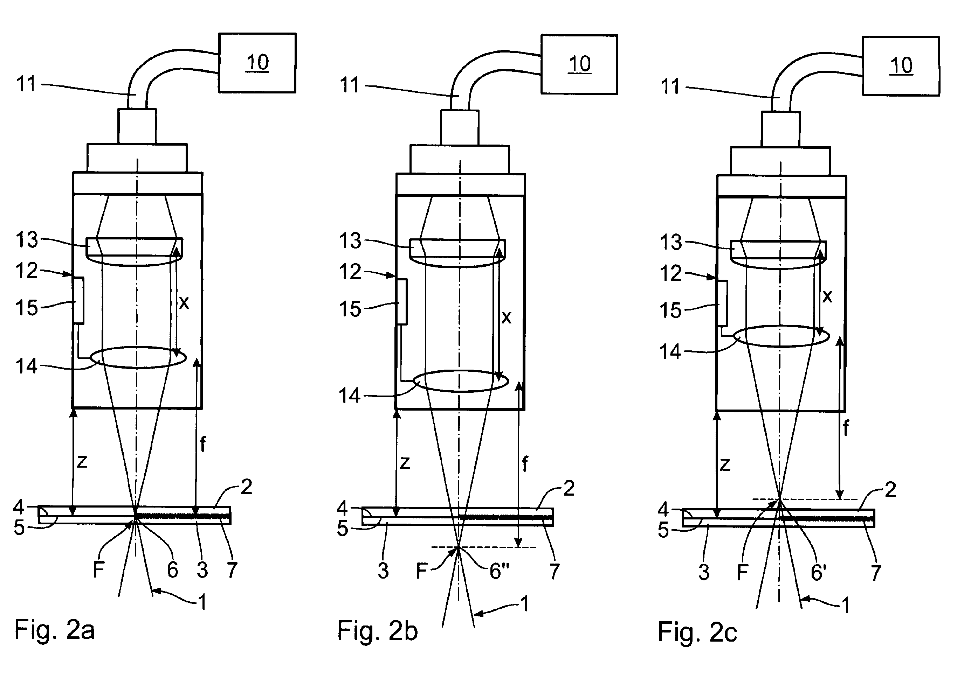

In Fig. 2 a bis c und 3 a bis c ist eine Vorrichtung zum Laserstrahlschweißen dargestellt, bei der die beiden Fügepartner 2, 3 in einer Durchstrahl-Konfiguration aufeinander angeordnet sind. Die Vorrichtungen weisen eine schematisch dargestellte Laserstrahlquelle 10 auf, deren Laserstrahl 1 über einen geeigneten Lichtleiter 11 zu der als Ganzes mit 12 bezeichneten Laser-Führungs- und Formungseinrichtung geführt ist. Letztere soll der Einfachheit halber im Folgenden mit Laserbearbeitungskopf 12 bezeichnet werden.

Im Laserbearbeitungskopf 12 ist eine Kollimationslinse 13 vorgesehen, die den divergenten, aus dem Lichtleiter 11 austretenden Laserstrahl 1 entsprechend kollimiert und zur Fokussierlinse 14 weiterführt. Letztere fokussiert den Laserstrahl 1 im Bereich der Fügepartner 2, 3 mit einer bestimmten Brennweite f.

Bei der Ausführungsform gemäß Fig. 2 ist die Fokussierlinse 14 durch einen motorischen Antrieb 15 in Richtung der Linsenachse verschiebbar angetrieben. Damit kann der Fokus F des Laserstrahls 1 in z-Richtung moduliert werden, wie dies anhand von Fig. 1 ausführlich beschrieben wurde. In Fig. 2a liegt der Fokus etwa im Bereich der Grenzflächen 4, 5 der beiden Fügepartner. In der Position gem. Fig. 2b ist die Fokussierlinse 14 von der Kollimationslinse 13 weg in Richtung der Fügepartner 2, 3 verschoben, sodass der Fokus F entsprechend in Richtung zum unteren Fügepartner 3 verlagert ist. Die zeichnerische Darstellung ist hier natürlich schematisch und entsprechend übertrieben.

Gemäß Fig. 2c ist die Fokussierlinse 14 über die ursprüngliche Position gem. Fig. 2a zur Kollimationslinse 13 hin verschoben, sodass der Fokus F nach oben in z-Richtung verschoben ist.

Mit Hilfe des Antriebs 15 kann also die Fokussierlinse 15 in ihre Position entsprechend der gewünschten Modulationsfrequenz und Amplitude der Fokusposition 6, 6', 6" in einer Oszillationsbewegung parallel zur z-Achse gesetzt werden.

Es ist darauf hinzuweisen, dass für eine entsprechende Steuerung des Antriebs 15 die Modulationsparameter vor oder während eines Schweißprozesses variiert werden können. So kann eine Änderung beispielsweise bei einer Produktion von mehreren Varianten oder Bauteilen auf einer Anlage vor dem eigentlichen Schweißprozess erfolgen. Bei einer entsprechenden Nahtdiagnostik kann es auch sinnvoll sein, Modulationsparameter während eines Schweißprozesses und insbesondere vom individuellen Bauteil abhängig entlang des Vorschubweges in x-Richtung zu variieren.

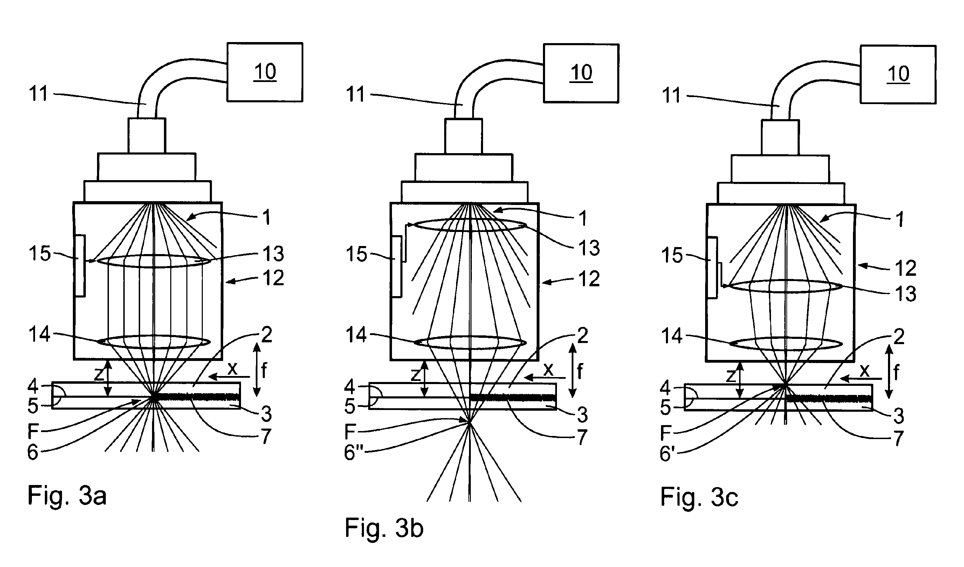

Bei der in den Fig. 3a bis c gezeigten Variante bleibt die Fokussierlinse 14 lagefixiert, während die Kollimationslinse 13 mit einem Antrieb 15 versehen ist. Ausgehend von der in Fig. 3a gezeigten Position, bei der Kollimations- und Fokussierlinse, 13, 14 so zueinander positioniert sind, dass die Fokusposition 6 wieder im Bereich der Grenzflächen 4, 5 der beiden Fügepartner 2, 3 liegt, kann durch eine Verschiebung der Kollimationslinse 13 weg (Fig. 3b) von der bzw. näher an die Fokussierlinse 14 (Fig. 3c) der Fokus F lagemoduliert werden. Die in Fig. 3b und 3c gezeigten Fokusposition 6' und 6" sind dabei wieder übertrieben gegenüber der Fokusposition 6 verschoben gezeichnet.

## Patentansprüche

1. Verfahren zum Laserschweißen von zwei Fügepartnern aus Kunststoff, bei dem ein fokussierter Laserstrahl (1) in eine Schweißzone (S) im Bereich der einander zugewandten Grenzflächen (4, 5) der Fügepartner (2, 3) zur Bildung einer Schweißnaht (7) mit einer bestimmten Nahttiefe (T) zwischen den Fügepartnern (2, 3) eingestrahlt wird, wobei die Laser-Leistungsdichte während des Verschweißvorganges in Richtung (z) der Nahttiefe (T) in der Schweißzone (S) moduliert wird,
**dadurch gekennzeichnet, dass**
die Modulation der Laser-Leistungsdichte durch eine Modulation der Fokusposition (6, 6', 6") des Laserstrahls (1) in Richtung (z) der Nahttiefe (T) erfolgt, wobei die Modulationsfrequenz der Laser-Leistungsdichte in Richtung (z) der Nahttiefe (T) mit einer Vorschubgeschwindigkeit des Laserstrahls (1) in Naht-Erstreckungsrichtung (x) derart korreliert ist, dass der Fokus (F) während des Vorschubs des Laserstrahls (1) in Naht-Erstreckungsrichtung (x) mindestens einmal die Nahttiefe (T) der Schweißnaht (7) überstreicht.

2. Verfahren nach Anspruch 1, **dadurch gekennzeichnet, dass** die Modulation der Laser-Leistungsdichte durch eine Modulation des Durchmessers (D_{F}) des Laserstrahls (1) in seinem Fokus (F) erfolgt.

3. Verfahren nach einem der vorgenannten Ansprüche, **dadurch gekennzeichnet, dass** mit der Schweißnaht (7) zwei auf Stumpfstoß zueinander positionierte Fügepartner (2, 3) miteinander verbunden werden.

4. Verfahren nach einem der vorgenannten Ansprüche, **dadurch gekennzeichnet, dass** der Wellenlängenbereich des Laserstrahls (1) zwischen 0,7 µm und 2,5 µm liegt.

## Claims

1. Method for laser welding of two joining members of plastic material in which a focussed laser beam (1) is emitted into a welding zone (S) in the region of the boundary surfaces (4, 5) of the joining members (2, 3) facing one another so as to form a weld seam (7) having a particular seam depth (T) between the joining members (2, 3), wherein the laser power density is modulated during the welding process in a direction (z) of the seam depth (T) in the welding zone (S),
**characterized in that**
the modulation of the laser power density is performed by a modulation of the focal position (6, 6', 6") of the laser beam (1) in the direction (z) of the seam depth (T), wherein the modulation frequency of the laser power density in the direction (z) of the seam depth (T) is correlated with the feed rate of the laser beam (1) in a direction of seam extension (x) in such a way that the focus (F) passes over the seam depth (T) of the weld seam (7) at least once when the laser beam (1) is moved in the direction of seam extension (x).

2. Method according to claim 1, **characterized in that** the modulation of the laser power density is performed by a modulation of the diameter (D_{F}) of the laser beam (1) in its focus (F).

3. Method according to one of the above claims, **characterized in that** by means of the weld seam (7), two joining members (2, 3) are joined together which are positioned relative to each other in such a way that a butt joint is formed.

4. Method according to one of the above claims, **characterized in that** the wavelength range of the laser beam (1) is between 0.7 µm and 2.5 µm.

## Revendications

1. Procédé pour le soudage au laser de deux parties à assembler en matière plastique, dans lequel un rayonnement laser (1) focalisé est appliqué dans une zone de soudure (S) au niveau de la partie des interfaces (4, 5) orientées l'une vers l'autre des parties à assembler (2, 3) pour la formation d'un cordon de soudure (7) avec une profondeur de cordon (T) définie entre les parties à assembler (2, 3), où la densité de puissance du laser pendant le processus de soudure est modulée dans la direction (z) de la profondeur du cordon (T) dans la zone de soudure (S),
**caractérisé en ce que**
la modulation de la densité de puissance du laser est réalisée par une modulation de la position focale (6, 6', 6") du rayonnement laser (1) dans la direction (z) de la profondeur de cordon (T), où la fréquence de modulation de la densité de puissance du laser dans la direction (z) de la profondeur de cordon (T) est en corrélation avec une vitesse d'avancement du rayonnement laser (1) dans la direction d'extension de la soudure (x) de telle sorte que le foyer (F) balaye au moins une fois la profondeur de cordon (T) du cordon de soudure (7) pendant l'avancement du rayonnement laser (1) dans la direction d'extension du cordon (x).

2. Procédé selon la revendication 1, **caractérisé en ce que** la modulation de la densité de puissance du laser est effectuée par une modulation du diamètre (D_{F}) du rayonnement laser (1) au niveau de son foyer (F).

3. Procédé selon l'une des revendications citée précédemment, **caractérisé en ce que** deux parties à assembler (2, 3) positionnées bout à bout sont reliées entre elles avec le cordon de soudure (7).

4. Procédé selon l'une des revendications citée précédemment, **caractérisé en ce que** le domaine de longueur d'ondes du rayonnement laser (1) se situe entre 0,7 µm et 2,5 µm.
